# EUROPEAN PATENT APPLICATION

(11) **EP 4 591 715 A1**
(43) Date of publication of application: **30.07.2025**
(21) Application number: 25154780.8
(22) Date of filing: 29.01.2025
(51) Int. Cl.: A23F 3/00, A23F 3/16, A23L 2/02, A23L 2/38

(54) **FERMENTED DRINK DERIVED FROM TEA WITHOUT REFINED SUGARS**

(30) Priority: 29.01.2024 ES 202430066
(71) Applicant: AMC Ideas S.L., 30100 Espinardo Murcia (ES)
(72) Inventor: STREITENBERGER JACOBI, SERGIO ARIEL, 30100 Espinardo/Murcia (ES)
(74) Representative: Martin Alvarez, Juan Enrique

(57) **Abstract**

The present invention relates to a fermented tea drink or "kombucha" comprising, as a carbon source for yeast fermentation, simple sugars exclusively derived from fruits, obtained by the addition of fruit juice during its preparation. Preferably, the fruit juice is clarified kaki persimmon (*Diospyros kaki*) juice. Kaki persimmon juice has a simple sugar content such that the required content of probiotics in "kombucha" is achieved with a shorter fermentation time. A second aspect of the invention provides a method for preparing a fermented tea beverage or "kombucha" comprising the addition of fruit juice, preferably kaki persimmon juice, as the sole carbon source for yeast fermentation. This invention results in the production of a fermented tea beverage without added disaccharides, only with monosaccharides that are fully digested by bacteria so as not to contain added sugar in the final beverage.

## Description

### Technical field of the invention

The present invention belongs to the field of fermented beverages, with very low alcohol or non-alcohol content, and which are produced by tea fermentation. These drinks are popularly known as "kombucha", as they are derived from traditional methods from China and the Far East.

### Background of the invention

Fermented drinks derived from tea have been known since time immemorial in China and the Far East. Due to their beneficial health properties and pleasant taste, their popularity has now spread to Western societies, mainly Europe and North America.

These types of drinks have a significant residual sugar content, as sugar (sucrose) must be added as a carbon source for fermentation to occur by bacteria and yeasts.

Due to this high sugar (sucrose) content, these fermented tea beverages or "kombucha" are unsuitable for mass consumption in Western societies, where the disease of diabetes is especially relevant due to its high incidence.

### Summary description of the invention

A first aspect of the invention provides a method for preparing a fermented tea beverage, comprising, as a carbon source for fermentation by bacteria and yeast, simple sugars exclusively derived from squeezed fruits, comprising the steps of:
- providing a concentrated tea infusion without the addition of sucrose;
- fermenting the concentrated tea infusion;
- adding fruit juice as the sole carbon source; and
- starting the fermentation of the beverage.

"Traditional" kombucha is made by fermenting a tea drink with the addition of refined sugar (sucrose) and by means of a colony of bacteria and yeasts known as SCOBY - an acronym for Symbiotic Culture Of Bacteria and Yeast -, which transforms sugar (sucrose) into organic acids, and a drink fermented with organic acids and microorganisms beneficial to health is obtained.

The Applicant has investigated that, if, instead of sugar (sucrose), the fermentation occurs from the simple sugars naturally present in fruit juices (glucose and fructose), the necessary fermentation period is shortened and, furthermore, a healthier kombucha is produced, since it does not contain sucrose and, therefore, has a lower glycaemic index, and is consequently more suitable for consumption by people with diabetes.

Simple sugars are understood as those of small molecular size that, therefore, are quickly assimilated by the body. Monosaccharides like fructose and glucose, naturally present in fruit; as well as disaccharides like sucrose (which is refined table sugar).

Preferably, the fruit juice is clarified kaki persimmon juice *(Diospyros kaki)* at 10-12° Brix. The amount used is 30g/L of sugars. Alternatively, peach and/or nectarine juice or mixtures of these juices may be used.

These juices have a simple sugar content such that the required amount of probiotics is achieved in the kombucha with a shorter fermentation time, and they contain a greatly reduced proportion of sucrose compared to their fructose and glucose content.

Alternatively, juices or juice mixtures of any fruit may be used provided that the mass ratio of glucose plus fructose relative to sucrose is greater than 100, preferably greater than 200 and, more preferably, greater than 250.

Preferably, the fermented tea beverage is obtained by preparing a concentrated tea infusion and its subsequent dilution and fermentation.

The tea can be black tea, green tea or oolong tea, although the most common is black tea. For the production of black tea, the leaves are crushed and exposed to high humidity, which causes an enzymatic oxidation by the polyphenol-oxidases. To produce green tea, heating methods are used that inactivate enzymes and microorganisms using steam, which prevents fermentation. Oolong tea is a traditional Chinese tea produced from partially fermented tea leaves that oxidise, and is made by drying the fresh leaves in the sun.

For the tea preparation, the *Camellia siniensis* tea plant is used, which, depending on the manufacturing process, is transformed into the different tea varieties mentioned above.

These types of tea are characterised in that they have a high content of catechins and other polyphenols that are used by the SCOBY for the preparation of Kombucha.

When using black tea, extraction should take place with water at a temperature of 90°C for a time of 3 to 10 minutes. If the extraction exceeds 10 minutes or takes place with water at a temperature higher than 90°C, a tea with too much astringency is produced. The extraction with black tea is preferably performed with an amount of tea of 50 g per litre of water, preferably with water at 90°C and for 5 minutes to obtain a concentrated infusion of black tea.

When using green tea, extraction should occur with water at a temperature of 75°C for a time of 3 to 5 minutes. If the extraction exceeds 5 minutes or takes place with water at a temperature higher than 75°C, a tea with too much astringency is produced. The extraction with green tea is preferably performed with an amount of tea of 40 g per litre of water, preferably with water at 75°C and for 5 minutes to obtain a concentrated infusion of green tea.

The aim is to obtain a concentrated infusion and then dilute it when used in the following production steps. This makes it possible to lower production costs, improve product stability and save significant amounts of water.

Optionally, after the preparation of a concentrated tea infusion, concentrated lemon juice is added to the infusion to adjust its pH to a value between 3 and 4.

The concentrated tea infusion subsequently undergoes centrifugation to separate any solid residue from the liquid.

After centrifugation, the concentrated tea infusion is pasteurised.

Preferably, the method comprises dilution and subsequent fermentation of the concentrated tea infusion.

After centrifugation, the concentrated tea infusion is diluted and mixed with hot fruit juice (kaki persimmon and/or peach and/or mixtures thereof).

Preferably, the fruit juice is clarified, concentrated kaki persimmon juice at 10-12° Brix. The amount used is 30g/L of sugars.

After mixing, inoculation of the resulting liquid with SCOBY of bacteria and yeasts and a stock tea solution from previous batches is carried out.

After inoculation, the fermentation is performed, preferably at temperatures of between 20 to 30°C, and more preferably at temperatures of between 26 to 28°C, for a period of between 7 and 14 days, preferably of 10 days or less.

A second aspect of the invention provides a fermented tea beverage comprising simple sugars exclusively derived from fruits provided by the addition of fruit juice.

Preferably, the fruit juice is clarified kaki persimmon juice *(Diospyros kaki)* at 10-12° Brix. The amount used is 30g/L of sugars.

Alternatively, peach and/or nectarine juice or mixtures of both juices may be used.

Alternatively, juices or juice mixtures of any fruit may be used provided that the mass ratio of glucose plus fructose relative to sucrose is greater than 100, preferably greater than 200 and, more preferably, greater than 250.

The tea can be black tea, green tea or oolong tea, although the most common is black tea. For the production of black tea, the leaves are crushed and exposed to high humidity, which causes an enzymatic oxidation by the polyphenol-oxidases. To produce green tea, heating methods are used that inactivate enzymes and microorganisms using steam, which prevents fermentation. Oolong tea is a traditional Chinese tea produced from partially fermented tea leaves that oxidise, and is made by drying the fresh leaves in the sun.

For the tea preparation, the *Camellia siniensis* tea plant is used, which, depending on the manufacturing process, is transformed into the different tea varieties mentioned above.

These types of tea are characterised in that they have a high content of catechins and other polyphenols that are used by the SCOBY for the preparation of Kombucha.

Preferably the beverage has a Brix index of 0.3 to 3, i.e. a sugar content of 3 to 30 g/L and a pH of 2.7 to 3.1.

### Brief Description of the Drawings

Figure 1 shows a diagram of the method for preparing a fermented tea drink according to an embodiment of the present invention.
Figure 2 represents a graph showing the content of probiotic compounds obtained when making a fermented tea drink using several types of fruit juices, and the control drink using sugar as a yeast fermentation substrate.

### Detailed description of the invention

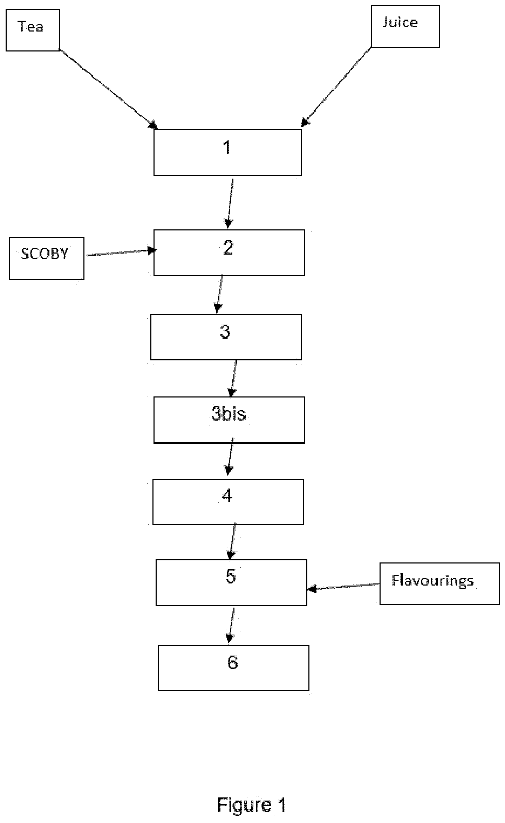

Below, a method is described for producing fermented tea beverages or "kombuchas", without adding sucrose or sugar, shown in Figure 1, comprising the steps of:
1. Preparation of the tea base with juices, including boiling water with the tea leaves, adding the fruit juice to the hot tea, stirring until completely dissolved, and cooling the sweetened tea mixture with fruit juice to room temperature.
2. Inoculation of the sweetened tea with the SCOBY culture of bacteria and yeasts comprising the transfer of the juice-sweetened tea to the fermentation vat, the addition of the SCOBY and stock tea solution to the fermentation vat, ensuring that they are immersed in the liquid and capping the fermentation vat. The SCOBY comprises several or all of the following microorganisms (at least one from each group):

| **Microorganism group** | **Genus and species** |
|---|---|
| | *Lactobacillus mali* |
| Lactic acid bacteria | *Lactobacillus casei* |
| (LAB) | *Lactobacillus hilgardii* |
| | *Leuconostoc mesenteroides* |
| | *Lactobacillus plantarum* |
| | *Streptococcus thermophilus* |
| | *Lactobacillus delbrueckii* |
| | *Lactobacillus paracasei* |
| | *Lactobacillus acidophilus* |
| | *Bifidobacterium lactis* |
| Acetic acid bacteria | *Komagataeibacter hansenii* |
| | *Komagataeibacter sp.* |
| | *Brettanomyces bruxellensis* |
| Yeast | *Zygosaccharomyces bailii* |
| | *Zygosaccharomyces sp.* |
| | *Pichia membranifaciens* |

Optionally, the following microorganisms can also be used:
The yeast *Saccharomyces cerivisiae*
The acetic acid bacteria *Acetobacter aceti, Acetobacter pasterianus, Gluconacetobacter diazotrophicus, Gluconacetobacter hansenii* and *Gluconacetobacter sacchari.*
3. The fermentation tank is maintained at a controlled temperature, between 26 to 28°C, for a period of between 7 and 14 days, allowing the SCOBY to metabolise the sugar from the fruit juice and transform it into organic acids such as acetic acid, lactic acid or gluconic acid while monitoring the process by tasting the kombucha to evaluate its flavour and acidity and quantifying its content through physical, chemical and chromatographic analyses.
3bis. Optionally, and depending on the amount of yeast in the fermentation, it is passed through a filtration bed in several stages with different pore size (5 to 1 micron) to retain mainly yeasts and allow the passage of the rest of the bacteria. With this point we manage to adjust and control the alcohol content that can be generated in the bottle during the shelf life of the drink.
4. Once the kombucha reaches the desired parameters, the SCOBY is carefully removed from the liquid, a portion of kombucha is reserved as a stock solution for the next batch and this fermentation is stored refrigerated for subsequent formulation with various fruits and ingredients.
5. In a mixing tank, the flavouring agents (fruits, herbs, spices...) are added to the bottles, the temperature of the isobaric tank is lowered to 2°C and carbonation is carried out for subsequent bottling.
6. After bottling, the samples are kept refrigerated until the end of their shelf life.

There are a number of critical aspects to keep in mind:
1- Selection of ingredients and quality control. High quality tea leaves should be selected to ensure optimal nutrition for the SCOBY. Rigorous quality control measures must be followed to verify the purity and safety of the raw materials, in order to obtain a product of consistent quality.
2- Hygienic process and sterilisation of the equipment. Strict hygiene protocols must be implemented during all stages to prevent product contamination. All containers, tanks, equipment and fermentation vats must be sterilised to maintain a sterile production environment.
3- Optimised fermentation conditions. Very precise temperature control must be achieved to achieve the desired taste, carbonation and acidity. PH monitoring and regulation are critical to ensure a safe and palatable product while preserving the SCOBY's activity.
4- Management of yeast and bacteria strains. Specific strains of yeast and bacteria have to be selected and cultivated to optimise the taste and health properties. Periodic monitoring and assessment of the SCOBY's vitality and health should be performed to maintain consistent fermentation rates.
5- Efficient pasteurisation and filtration. An effective filtration system must be implemented to eliminate yeast and achieve the desired clarification. Pasteurisation processes or equivalent must be used to stabilise the product and improve its safety.
6- Addition of flavour and carbonation management. Controlled flavour infusion methods must be followed to achieve consistent and palatable flavour profiles. Effective carbonation management must be implemented to ensure uniform effervescence in the end product.
7- Optimisation of packaging and storage. Aseptic packaging techniques must be applied to avoid post-fermentation contamination, and to extend the product's shelf life. Appropriate storage conditions, including temperature and light control, must be ensured to maintain the quality of the product during its distribution.

By meticulously adhering to these critical aspects in the industrial production of kombucha, this method ensures a standardised and reliable production process, allowing industrial production while maintaining the unique flavour characteristics and health effects associated with this fermented tea and fruit-based beverage.

### EXAMPLE

This example describes an experiment performed wherein several fermented tea beverages have been prepared using different types of fruit juices as a yeast fermentation substrate and compared to a fermented tea beverage to which sugar has been added as a yeast fermentation substrate.

Selection and characterisation of sugars from fruits. Sucrose (sugar) is typically used for the growth of the SCOBY (bacteria and yeast culture).. To make a fermented tea drink different from what exists in the state of the art, several concentrated fruit juices have been characterised for use as a source of carbohydrates in the yeast fermentation. A characterisation of the sugar profile was carried out by HPLC; the results are shown in the following tables:

| **Simple sugars** | **Clarified kaki persimmon concentrate (mg/kg)** |
|---|---|
| Fructose | 278.4 |
| Glucose | 332.4 |
| Sucrose | 2.3 |
| Maltose | 0 |
| Sorbitol | 0 |
| Isomaltose | 0 |
| Glucose/Fructose | 1.19 |
| Free sugar extract | 58.1 |

| **Simple sugars** | **Deionised apple concentrate (mg/kg)** |
|---|---|
| Fructose | 39.0 |
| Glucose + Sorbitol | 47.6 |
| Sucrose | 21.2 |
| Maltose | 0 |
| Sorbitol | 0 |
| Isomaltose | 0 |
| Glucose/Fructose | 1.22 |

| **Simple sugars** | **Deionised kaki persimmon concentrate (mg/kg)** |
|---|---|
| Fructose | 83.8 |
| Glucose | 88.5 |
| Sucrose | 0.5 |
| Maltose | 0 |
| Sorbitol | 0 |
| Isomaltose | 0 |
| % sucrose | 0.3 |
| Glucose/Fructose | 1.06 |

After selecting the colonies that will constitute each of the bacterial cultures which will act as fermentation starters, their behaviour in the different fermentation substrates was evaluated. Although the usual fermentation substrate of kombuchas is green (or black) tea sweetened with sucrose, as mentioned above, the intention is to replace sucrose with some of the juices (rich in sugars) previously characterised. Thus, the evaluation of the microorganisms' behaviour was performed using a mixture of green tea + juice as the culture broth.

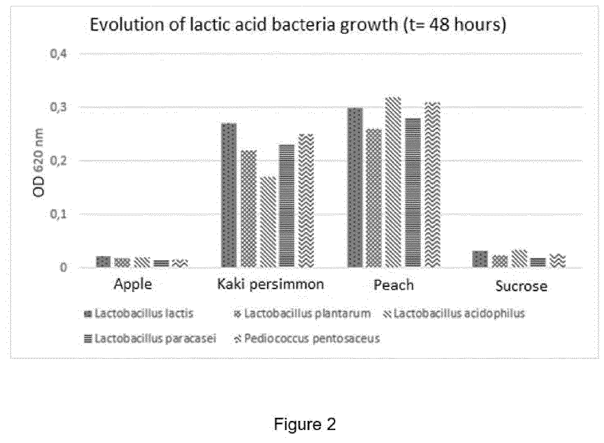

Figure 2 shows the results of bacterial growth (measured as increased turbidity of the culture) for 6 strains of lactic acid bacteria belonging to the genera *Lactobacillus lactis, Lactobacillus plantarum, Lactobacillus acidophilus, L. paracasei and Pediococcus pentosaceus* after being incubated for 48 hours in green tea/juice or green tea/sucrose mixtures.

As can be seen in the graph of Figure 2, green tea blends supplemented with peach juice or kaki persimmon juice were those wherein increased bacterial growth was observed, followed by the sucrose control. In last place is the sample with apple juice.

PH does not seem to be a determining factor in the modulation of bacterial growth in these mixtures, at least for these strains, since all the samples had an acidic pH ranging between 3.76 and 4.28 (mixture with peach or kaki persimmon juice, respectively).

Regarding the control mixture, it should be noted that the bacterial growth observed for all the microorganisms evaluated is lower than expected. This could be explained, at least in part, because the amounts of monosaccharides present are small in the control mixture, wherein the sugars are primarily in the form of disaccharides (sucrose) that must be enzymatically pre-hydrolysed prior to bacterial fermentation as such.

## Claims

1. A method for preparing a fermented tea beverage comprising, as a carbon source for fermentation by bacteria and yeast, simple sugars exclusively derived from squeezed fruits, said method being **characterised in that** it comprises the steps of:
- providing a concentrated tea infusion without the addition of sucrose;
- fermenting the concentrated tea infusion;
- adding fruit juice as the sole carbon source; and
- starting the fermentation of the beverage.

2. A method according to claim 1, **characterised in that** juices or mixtures of juices of any fruit are used provided that the mass ratio of glucose plus fructose relative to sucrose is greater than 100, preferably greater than 200 and, more preferably, greater than 250.

3. A method according to claim 1, **characterised in that** the fruit juice is clarified kaki persimmon (*Diospyros kaki*) juice at 10-12° Brix.

4. A method according to claim 1, **characterised in that** the fruit juice is peach and/or nectarine juice or mixtures of peach and/or nectarine juice and kaki persimmon juice.

5. A method according to claim 3, **characterised in that** black tea is used and the concentrated black tea infusion takes place with water at a temperature of 90°C for a time of 3 to 10 minutes with an amount of tea of 50 g per litre of water, preferably for 5 minutes.

6. A method according to claim 3, **characterised in that** green tea is used and the concentrated green tea infusion takes place with water at a temperature of 75°C for a time of 3 to 5 minutes, with an amount of tea of 40 g per litre of water, preferably for 5 minutes.

7. A method according to any preceding claim, **characterised in that** it comprises adding concentrated lemon juice to the concentrated tea infusion to adjust the pH to a value between 3 and 4.

8. A method according to any preceding claim, comprising centrifuging the tea infusion.

9. A method according to any preceding claim, comprising pasteurising the concentrated tea infusion.

10. A method according to any preceding claim, **characterised in that** it comprises diluting and mixing the concentrated tea infusion with hot fruit juice.

11. A method according to any of claims 2 to 9, except claim 4, **characterised in that** the kaki persimmon juice is concentrated juice clarified at 10-12° Brix and with a sugar content of 30 grams/litre.

12. A method according to any preceding claim, **characterised in that** inoculation of the diluted mixture of tea and fruit juice with a culture of bacteria and yeast, comprising lactic bacteria and acetic bacteria, occurs.

13. A method according to any preceding claim, **characterised in that** a lactic fermentation of the mixture of fruit juice and concentrated tea infusion with one or more of the following lactic bacteria occurs: *Lactobacillus mali, Lactobacillus casei, Lactobacillus hilgardii, Leuconostoc mesenteroides, Lactobacillus plantarum, Streptococcus thermophilus, Lactobacillus delbrueckii, Lactobacillus paracasei, Lactobacillus acidophilus, Bifidobacterium lactis,* or mixtures thereof.

14. A method according to any preceding claim, **characterised in that** fermentation takes place at temperatures of between 20 to 30°C for a period of between 7 and 14 days.

15. A method according to claim 14, **characterised in that** a fermentation takes place at temperatures between 26 and 28°C for a period of between 7 and 10 days.

16. A fermented tea drink comprising simple sugars exclusively derived from fruit provided by the addition of fruit juice.

17. A beverage according to claim 16, **characterised in that** juices or juice mixtures of any fruit are used provided that the mass ratio of glucose plus fructose relative to sucrose is greater than 100, preferably greater than 200 and, more preferably, greater than 250.

18. A beverage according to claim 16, **characterised in that** the fruit juice is kaki persimmon *(Diospyros kaki)* juice.

19. A beverage according to claim 18, **characterised in that** the kaki persimmon juice *(Diospyros kaki)* is concentrated persimmon juice clarified at 10-12° Brix and an amount of sugars of 30 g/L.

20. A beverage according to claim 16, **characterised in that** the fruit juice is peach juice and/or nectarine or mixtures of peach and/or nectarine juice with kaki persimmon juice.
